# EUROPEAN PATENT SPECIFICATION

(11) **EP 2 399 954 B1**
(45) Date of publication and mention of the grant of the patent: **22.11.2017**
(21) Application number: 10743717.0
(22) Date of filing: 15.02.2010
(51) Int. Cl.: C08L 15/02, C08K 5/09, C08K 5/40, F16G 1/08, F16L 11/04, C09K 3/00, F16G 1/06

(54) **SULFUR-MODIFIED CHLOROPRENE ELASTOMER COMPOSITION, AND FORMULATION AND VULCANIZATE OF THE SAME**
SCHWEFELMODIFIZIERTE CHLORPROPEN-ELASTOMER-ZUSAMMENSETZUNG SOWIE FORMULIERUNG UND VULKANISAT DARAUS
COMPOSITION D'ÉLASTOMÈRE DE CHLOROPRÈNE MODIFIÉ PAR DU SOUFRE ET FORMULATION ET VULCANISAT DE CELLE-CI

(30) Priority: 23.02.2009 JP 2009038823
(43) Date of publication of application: 28.12.2011
(73) Proprietor: Denka Company Limited, Tokyo 103-8338 (JP)
(72) Inventor: MIYAUCHI Toshiaki, Itoigawa-city Niigata 949-0393 (JP); ABE Yasushi, Itoigawa-city Niigata 949-0393 (JP); OTSU Toshiaki, Itoigawa-city Niigata 949-0393 (JP)
(74) Representative: Smaggasgale, Gillian Helen
(86) International application number: PCT/JP2010/052192
(87) International publication number: WO 2010/095591

(56) References cited:
- JP-A- 3 059 043
- JP-A- 7 062 029
- JP-A- 7 062 029
- JP-A- 11 209 522
- JP-A- 49 018 931
- JP-A- 2002 338 745
- JP-A- 2007 106 994
- JP-B- 43 001 871

## Description

### Technical Field

The present invention relates to a sulfur-modified chloroprene elastomer composition and the blend and vulcanized article thereof.

### Background Art

Sulfur-modified chloroprene elastomers are superior in impact resilience, tear strength, flex fatigue resistance and others, but, as they are copolymers of sulfur and chloroprene, have problems such as being deteriorated in viscosity during storage and being readily scorched during processing. Thus, there exists a need for a sulfur-modified chloroprene elastomer composition superior in viscosity stability during storage and scorching resistance during processing.

Methods of adjusting the pH of the latex before isolation of the copolymer to 4.8 to 6 were proposed as methods of improving the viscosity stability during storage of the sulfur-modified chloroprene elastomer composition (see, for example, Patent Literatures 1 and 2). In addition, methods of blending a thiuram compound were proposed as the methods of improving the scorching resistance (see, for example, Patent Literatures 3 and 4).

### Citation List

### Patent Literature

[Patent Literature 1] United State Patent No. 3981854
[Patent Literature 2] Japanese Unexamined Patent Application Publication No. 47-34977
[Patent Literature 3] United State Patent No. 4683270
[Patent Literature 4] Japanese Unexamined Patent Application Publication No. 7-62029 (Japanese Patent No. 3480003)

### Summary of Invention

### Technical Problems

However, there is a problem that it is difficult to improve both viscosity stability and scorching resistance simultaneously by the conventional technologies described above, which improve only either viscosity stability or scorching resistance.

A primary object of the present invention is to provide a sulfur-modified chloroprene elastomer composition superior in both viscosity stability during storage and scorching resistance during processing and the blend and vulcanized article thereof.

### Solution to Problem

After intensive studies to solve the problems above, the inventors have found that it is possible to improve both viscosity stability during storage and scorching resistance during processing of a sulfur-modified chloroprene elastomer composition, by specifying the amount of the organic acids and the organic acid salts, more specifically, the organic acid content, the ash content, and the mass ratio thereof and additionally by blending a particular amount of a thiuram compound with the composition, and made the present invention.

Specifically, the sulfur-modified chloroprene elastomer composition according to the present invention comprises a thiuram compound in an amount of 1 to 2.5 mass % and has an organic acid content, as determined according to JIS K6237, of 1.5 to 15 mass %, an ash content, as determined according to JIS K6228, of 0.03 to 0.2 mass %, and a mass ratio of the organic acid content to the ash content (organic acid content/ash content) of 50 to 500.

In the composition, the ash may contain sodium and/or potassium.

The thiuram compound to be blended may be at least one compound selected from tetraethylthiuram disulfide, tetrabutylthiuram disulfide and tetrakis(2-ethylhexyl)thiuram disulfide.

Further, the organic acid contained may be a rosin acid and/or a rosin acid derivative.

The blend according to the present invention is a blend containing the sulfur-modified chloroprene elastomer composition described above and is used, for example, as a belt material, an air cushioning material, a hose material, or a wet suit material.

The vulcanized article according to the present invention is prepared by vulcanizing the blend described above.

### Advantageous Effects of Invention

It is possible according to the present invention to obtain a sulfur-modified chloroprene elastomer composition superior in viscosity stability during storage and scorching resistance during processing because the composition contains a particular amount of a thiuram compound and the ranges of the organic acid and ash contents and the mass ratio thereof in the composition are specified.

### Description of Embodiments

The present invention relates to a sulfur-modified chloroprene elastomer composition, as defined in claim 1 and to an article, as defined in claim 6, to a use, as defined in claim 7, and a method, as defined in claim 8, with the composition of claim 1 being blended as defined in claim 5.

Hereinafter, embodiments of the invention will be described in detail. It should be understood that the present invention is not limited to the embodiments below.

### (First embodiment)

First, the sulfur-modified chloroprene elastomer in the first embodiment of the present invention will be described. The sulfur-modified chloroprene elastomer composition in the present embodiment comprises a thiuram compound in an amount of 1 to 2.5 mass % and has an organic acid content, as determined by JIS K6237, of 1.5 to 15 mass %, an ash content, as determined by JIS K6228, of 0.03 to 0.2 mass %, and a ratio thereof (organic acid content/ash content) of 50 to 500.

### [Sulfur-modified chloroprene elastomer]

The sulfur-modified chloroprene elastomer, which is the principal component of the sulfur-modified chloroprene elastomer composition in the present embodiment, is prepared by emulsion polymerization of 2-chloro-1,3-butadiene, 2,3-dichloro-1,3-butadiene, and sulfur by using an emulsifier and a polymerization initiator and regulating the molecular weight thereof to a particular value by using a molecular weight regulator.

2,3-Dichloro-1,3-butadiene is effective in improving the crystallization resistance of the sulfur-modified chloroprene elastomer composition obtained. However, when the blending amount is less than 1 part by mass with respect to 100 parts by mass of 2-chloro-1,3-butadiene, the crystallization resistance of the polychloroprene elastomer composition obtained may not be improved and the mechanical strength of the vulcanized article may decline in winter. Alternatively when the blending amount of 2,3-dichloro-1,3-butadiene is more than 20 parts by mass, the mechanical properties such as tensile strength of the vulcanized article produced by vulcanizing the sulfur-modified chloroprene elastomer composition obtained may decline. Thus, the blending amount of 2,3-dichloro-1,3-butadiene is preferably in the range of 1 to 20 parts by mass, more preferably in the range of 3 to 7 parts by mass, with respect to 100 parts by mass of 2-chloro-1,3-butadiene.

Sulfur is effective in improving the impact resilience, tear strength, flex fatigue resistance and others of the vulcanized article produced by vulcanizing the sulfur-modified elastomer composition obtained. However, if the blending amount of sulfur is less than 0.1 part by mass with respect to 100 parts by mass of mixed monomers of 100 parts by mass of 2-chloro-1,3-butadiene and 1 to 20 parts by mass of 2,3-dichloro-1,3-butadiene, the mechanical properties of the sulfur-modified chloroprene elastomer composition obtained may not be improved. Alternatively, a sulfur blending amount of more than 2.0 parts by mass may lead to drastic increase of the roll tackiness during processing and thus to deterioration in workability. Thus, the sulfur blending amount is preferably 0.1 to 2.0 parts by mass with respect to 100 parts by mass of the monomer mixture of 100 parts by mass of 2-chloro-1,3-butadiene and 1 to 20 parts by mass of 2,3-dichloro-1,3-butadiene, more preferably, 0.3 to 1.5 parts by mass for further improvement of the processability and the mechanical properties.

The emulsifier for use may be an organic acid, an organic acid metal salt, an organic acid alkali-metal salt or the like. These emulsifiers can be used alone or in combination. Examples of the organic acids or the salts thereof for use then include saturated or unsaturated fatty acids having 6 to 22 carbon atoms or the salts thereof, rosin acids or the salts or derivatives thereof, condensates of ß-naphthalenesulfonic acid and formaldehyde or the salts thereof and the like.

Among the compounds above, use of a rosin acid or the salt or derivative thereof is preferable, and it is possible in this way to improve the polymerization stability during emulsion polymerization. Examples of the rosin acids for use in production of the sulfur-modified chloroprene elastomer composition in the present embodiment include gum rosin acid, tall oil rosin acid, abietic acid, disproportionated abietic acid and the like.

Alternatively, examples of the metal components forming a metal salt with the organic acid or an alkali-metal salt with the organic acid include sodium, potassium, calcium, magnesium and the like, but, if an organic acid salt is used as the emulsifier from the viewpoint of polymerization stability, it is preferably a sodium or potassium salt.

### [Thiuram compound]

The thiuram compound acts as a molecular weight regulator for the sulfur-modified chloroprene elastomer and is effective in regulating its Mooney viscosity. Thus for reduction of the Mooney viscosity of the composition, the blending amount of the thiuram compound is preferably increased. The thiuram compound has an action as a vulcanizing retarder during processing, as it remains in the isolated sulfur-modified chloroprene elastomer composition and is effective in improving the scorching resistance during processing.

Examples of the thiuram compounds for use include tetraethylthiuram disulfide, tetrabutylthiuram disulfide, tetrakis(2-ethylhexyl)thiuram disulfide and the like. It is possible by using these compounds to improve the viscosity stability during regulation of Mooney viscosity and the scorching resistance during processing at the same time.

The thiuram compound is preferably added in a blending amount that gives an analytical value in the range of 1 to 2.5 mass %, more preferably in the range of 1.3 to 2.5 mass %, in the isolated sulfur-modified chloroprene elastomer composition. It is because an analytical value of the thiuram compound of less than 1 mass % may not lead to improvement of the scorching resistance of the sulfur-modified chloroprene elastomer composition obtained, while an analysis value of more than 2.5 mass % may lead to deterioration in storage viscosity stability and tensile strength.

### [Organic acid content]

The modified chloroprene elastomer composition in the present embodiment has an organic acid content, as determined by JIS K6237, of 1.5 to 15 mass %, preferably 3 to 10 mass %. The organic acids as determined by the method are those derived from the emulsifier, and the value of organic acid content can be regulated by modification of the blending rate of the emulsifier. However when the organic acid content of the composition is leas than 1.5 mass %, the stability of the latex during emulsion polymerization and during regulation of Mooney viscosity declines, and when the organic acid content is more than 15 mass %, the tensile strength declines.

The organic acid is contained not only when the emulsifier is an organic acid but also when the emulsifier is an organic acid salt. It is because, when an organic acid salt is used as dissolved in water, it is present then in the solution (emulsifier) both in the state of free organic acid and organic acid salt. In addition, the organic acid analyzed is desirably a rosin acid and/or a rosin acid derivative. It is possible in this way to improve the polymerization stability during emulsion polymerization. A rosin acid or the salt or derivative thereof is preferably used as the emulsifier, to make the organic acid of the modified chloroprene elastomer composition a rosin acid and/or a rosin acid derivative.

### [Ash content]

The modified chloroprene elastomer composition in the present embodiment has an ash content, as determined by JIS K6228, of 0.03 to 0.2 mass %, preferably 0.03 to 0.1 mass %. The ash content as determined by the method is an indicator of the amount of organic acid salts, which derive from the organic acid metal salts and organic acid alkali-metal salts used as the emulsifier, and it is possible to regulate the value by modifying the blending amounts thereof. However when the ash content of the composition is less than 0.03 mass %, the scorching resistance and the processability such as roll workability declines, while when it is more than 0.2 mass %, the viscosity stability of the composition during storage declines.

The ash desirably contains sodium and/or potassium. It is thus possible to improve polymerization stability. A sodium salt and/or a potassium salt of organic acid may be used as the emulsifier, to make the ash of the modified chloroprene elastomer composition contain sodium and potassium.

### [Organic acid/ash ratio]

In the modified chloroprene elastomer composition in the present embodiment, the mass ratio of the organic acid content to the ash content (organic acid /ash) is 50 to 500. It is because the viscosity storage stability is not improved sufficiently when the ratio is less than 50, while it is difficult to secure the emulsification stability during polymerization when it is more than 500. The mass ratio of the organic acid content to the ash content (organic acid /ash) is desirably in the range of 70 to 500, from the viewpoint of viscosity storage stability.

### [Production method]

Hereinafter, a method of producing the modified polychloroprene composition in the present embodiment will be described. First in the present embodiment, 2-chloro-1,3-butadiene, 2,3-dichloro-1,3-butadiene and sulfur are emulsion-polymerized. The polymerization temperature then is preferably in the range of 0 to 100°C, more preferably in the range of 0 to 55°C.

The sulfur-modified chloroprene elastomer thus obtained has an entire monomer conversion rate preferably in the range of 50% to 95%, more preferably in the range of 60 to 90%. It is possible, by regulating the ratio in the range above, to obtain a sulfur-modified chloroprene elastomer that gives a vulcanized article superior in mechanical properties.

For regulation of the final conversion rate, polymerization may be terminated, as a polymerization inhibitor for termination of the polymerization reaction is added to the polymerization solution when a desired conversion rate is obtained. The polymerization inhibitor for use may be any commonly used inhibitor, and examples thereof include thiodiphenylamine, 4-tertiary-butylcatechol, 2,2-methylene bis-4-methyl-6-tertiary-butylphenol and the like.

A particular amount of the thiuram compound is added to the polymerization-terminated sulfur-modified chloroprene elastomer. The sulfur-modified chloroprene elastomer composition is then isolated. The method is not particularly limited, and the sulfur-modified chloroprene elastomer may be prepared by adjustment of the pH of the latex to 4.5 to 6.5 by addition of a known pH adjuster and subsequently by a common method of freeze solidification, water washing, and hot air drying.

The Mooney viscosity of the sulfur-modified chloroprene elastomer composition obtained after isolation is preferably 30 to 100, more preferably 30 to 70. When the Mooney viscosity of the composition is less than 30, the mechanical strength may decline, while when it is 100 or more, the processability may decline.

The sulfur-modified polychloroprene elastomer composition in the present embodiment may contain, as needed, additionally natural rubbers, butyl rubbers, BRs, NBRs, EPDMs and the like.

As described in detail, the sulfur-modified chloroprene elastomer composition in the present embodiment, which has an organic acid content of 1.5 to 15 mass % and an ash content of 0.03 to 0.2 mass % in the composition and has a mass ratio thereof of 50 to 500, is improved in its viscosity stability during storage. In addition, because the blending amount of the thiuram compound is 1 to 2.5 mass %, it is possible to improve the scorching resistance during processing without deterioration in viscosity stability during storage.

The sulfur-modified chloroprene elastomer composition in the present embodiment can be used favorably as a belt material, an air cushioning material, a hose material, a wet suit materials or the like.

### (Second embodiment)

Hereinafter, the blend in the second embodiment of the present invention will be described. The blend in the present embodiment is a composition containing the sulfur-modified chloroprene elastomer composition in the first embodiment and softeners, fillers, reinforcing agents, plasticizers, processing aids, lubricants, aging inhibitors, stabilizers, silane-coupling agents and others that are added thereto according to its application before practical use, and such a blend can be used, for example, as a belt material, an air cushioning material, a hose material, or a wet suit material.

The blend in the present embodiment, which contains a sulfur-modified chloroprene elastomer composition containing 1 to 2.5 mass % of a thiuram compound and having an organic acid content of 1.5 to 15 mass %, an ash content of 0.03 to 0.2 mass % and a ratio thereof (organic acid content/ash content) of 50 to 500 blended thereto, gives a blend superior both in viscosity stability during processing and scorching resistance.

### (Third embodiment)

Hereinafter, the vulcanized article in the third embodiment of the present invention will be described. The vulcanized article in the present embodiment is prepared by vulcanizing the blend in the second embodiment described above. Specifically, the vulcanizing is carried out by blending a vulcanizing agent and a vulcanizing accelerator used in chloroprene rubbers with the sulfur-modified chloroprene elastomer composition, kneading the mixture at a temperature of the vulcanizing temperature or lower, molding it into a desired shape and vulcanizing the molding. The vulcanizing temperature then may be set, as appropriate, according to the composition of the sulfur-modified polychloroprene elastomer composition and the kind of the vulcanizing agent. Normally a temperature in the range of 140 to 190°C is preferable, and that in the range of 150 to 180°C is more preferable.

Examples of the vulcanizing agents for use include pure metals such as beryllium, magnesium, zinc, calcium, barium, germanium, titanium, tin, zirconium, antimony, vanadium, bismuth, molybdenum, tungsten, tellurium, selenium, iron, nickel, cobalt, and osmium, and the oxides and hydroxides thereof. Among the metal compounds above, calcium oxide, zinc oxide, antimony dioxide, antimony trioxide, and magnesium oxide, which have high vulcanizing efficiency, are preferable. These vulcanizing agents may be used in combination of two or more.

Apparatuses used for kneading, molding, and vulcanizing the sulfur-modified polychloroprene elastomer composition and those for kneading and molding the vulcanized article may be any apparatuses normally used in rubber industry.

The vulcanized article can be prepared by blending softeners, fillers, reinforcing agents, plasticizers, processing aids, lubricants, aging inhibitors, stabilizers, silane-coupling agents and others with the sulfur-modified polychloroprene elastomer composition according to its application before practical use and molding and vulcanizing the blend.

Examples of the fillers and reinforcing agents for use then include carbon black, silica, clay, talc, calcium carbonate and the like. The total blending amount of these fillers and reinforcing agents is preferably in the range of 30 to 100 parts by mass with respect to 100 parts by mass of the sulfur-modified polychloroprene elastomer composition.

Examples of the plasticizers for use include dioctyl phthalate, dioctyl adipate and the like. The blending amount of the plasticizers is preferably in the range up to about 50 parts by mass with respect to 100 parts by mass of the sulfur-modified polychloroprene elastomer composition.

Examples of the aging inhibitors include amine-based aging inhibitors, imidazole-based aging inhibitors, metal carbamate salts, phenol-based aging inhibitors, waxes and the like, and these aging inhibitors may be used alone or in combination. Examples of aging inhibitor species higher in heat resistance-improving effect include amine-based aging inhibitors such as 4,4'-bis(α,α-dimethylbenzyl)diphenylamine and octylated diphenylamine and the like.

Examples of the softeners include petroleum softeners such as lubricating oils, process oils, paraffins, liquid paraffins, vaseline, and petroleum asphalts; vegetable oil-based softeners such as rapeseed oil, flaxseed oil, castor oil, and palm oil, and these softeners can be used alone or in combination.

The vulcanized article in the present embodiment, which is obtained by vulcanizing a sulfur-modified chloroprene elastomer composition containing 1 to 2.5 mass % of a thiuram compound and having an organic acid content of 1.5 to 15 mass %, an ash content of 0.03 to 0.2 mass %, and a rate thereof (organic acid content/ash content) of 50 to 500 or the blend thereof is resistant to scorching during molding processing. In addition, because the principal component of the vulcanized article is a sulfur-modified chloroprene elastomer, it is also superior in physical properties such as impact resilience, tear strength, and flex fatigue resistance.

### Examples

Hereinafter, advantageous effects of the present invention will be described specifically with reference to Examples and Comparative Examples of the present invention. It should be understood that the present invention is not restricted by these Examples. In the present Examples, the sulfur-modified chloroprene elastomer compositions in Examples and Comparative Examples were prepared by the method shown below; the storage viscosity stability; and the scorching resistance thereof and the physical properties of the vulcanized article were evaluated.

### <Preparation of sulfur-modified chloroprene elastomer composition>

In a four-necked flask having a capacity of 5 liter, were placed 130 parts by mass of purified water, 4 parts by mass of potassium rosinate salt, 0.5 part by mass of ß-formalin naphthalenesulfonate, 99 parts by mass of 2-chloro-1,3-butadiene, 1 part by mass of 2,3-dichloro-1,3-butadiene, 1 part by mass of sulfur and other chemicals, and the mixture was polymerized by using potassium persulfate as an initiator under nitrogen stream. When the monomeric conversion rate reached 70%, thiodiphenylamine was added for termination of polymerization.; 5 parts by mass of a thiuram compound was added thereto; and unreacted monomers were removed by a common method of steam trapping. The mixture was then kept at a temperature of 50°C for 6 hours, as it was stirred. Then, treatment of the mixture by a common method of freeze solidification and drying gave a sulfur-modified chloroprene elastomer composition of Example 1.

In addition, the sulfur-modified elastomer compositions of Examples 2 to 9 and Comparative Examples 1 to 6, which are different in organic acid content, ash content, and the mass ratio thereof, were prepared by a method and under a condition similar to those in Example 1, except that the blending amount of the potassium rosinate salt was altered.

The ash content was determined in accordance with JIS K6228. The organic acid content was determined in accordance with JIS K6237. The content of the thiuram compound was determined by dissolving in benzene a sulfur-modified chloroprene elastomer composition previously cut into pieces, reprecipitating it with methanol, and measuring the content in the residual solution by high-performance liquid chromatography (HPLC).

### <Kneading>

Subsequently, 1 part by mass of stearic acid, 2 parts by mass of octamine, 40 parts by mass of GPF carbon black (#55, produced by Asahi Carbon Co., Ltd.), 4 parts by mass of magnesium oxide, and 5 parts by mass of zinc oxide were blended with 100 parts by mass of each of the sulfur-modified chloroprene elastomer compositions obtained in Examples and Comparative Examples, in a 3 liter kneader (32 rpm, cooling water temperature: 30°C). Then, the agitation direction was reversed and the mixture was kneaded additionally for 1 minute. The compound (blend) was molded into a 3-mm sheet by using an 8-inch roll.

### <Test on storage viscosity stability>

The storage viscosity stability was determined by measuring the Mooney viscosity of each of the sulfur-modified chloroprene elastomer compositions of Examples and Comparative Examples during production and after storage under an atmosphere at a temperature of 40°C for 60 days and comparing these values. The Mooney viscosity was determined in accordance with JIS K6300 by using a Mooney viscometer.

### <Tests on scorching resistance and vulcanizing physical properties>

The scorching resistance was determined by measuring a scorch time in accordance with JIS K6300 by using a test sample prepared from a blend (sheet) prepared from each of the sulfur-modified chloroprene elastomer compositions of Examples and Comparative Examples.

Alternatively, physical properties of the vulcanized article were determined by measuring the tensile physical properties thereof in accordance with JIS K6251 and the hardness thereof in accordance with JIS K6253 by using a sample prepared by making a blend (sheet) prepared from each of the sulfur-modified chloroprene elastomer compositions of Examples and Comparative Examples, carrying out press vulcanization of the blend under a condition of 150°C×20 minutes, forming a vulcanized sheet having a thickness of 2 mm, and molding the sheet by using a No. 3 dumbbell.

Results are summarized in the following Tables 1 and 2.

**[Table 1]**

| | | | Example | | | | | | | | |
|---|---|---|---|---|---|---|---|---|---|---|---|
| | | | 1 | 2 | 3 | 4 | 5 | 6 | 7 | 8 | 9 |
| Sulfur-modified chloroprene elastomer composition | Organic acid content (parts by mass) | | 6.0 | 1.5 | 15.0 | 15.0 | 6.0 | 6.0 | 6.0 | 6.0 | 6.0 |
| | Ash content (parts by mass) | Sodium | 0.07 | 0.03 | 0.03 | 0.2 | 0.07 | 0.07 | - | 0.07 | 0.07 |
| | | Potassium | - | - | - | - | - | - | 0.11 | - | - |
| | Organic acid content/ash content | | 86 | 50 | 500 | 75 | 86 | 86 | 55 | 86 | 86 |
| | Tetraethylthiuram disulfide | | 1.8 | 1.8 | 1.8 | 1.8 | 1.0 | 2.5 | 1.8 | - | - |
| | Tetrabutylthiuram disulfide | | - | - | - | - | - | - | - | 2.0 | - |
| | Tetrakis(2-ethylhexyl)thiuram disulfide | | - | - | - | - | - | - | - | - | 2.0 |
| Storage viscosity stability (pt) | | | -10 | -14 | -3 | -12 | -9 | -13 | -12 | -7 | -6 |
| Scorching resistance (min) | | | 28 | 32 | 21 | 25 | 24 | 35 | 32 | 34 | 37 |
| Physical properties of vulcanized article | Tensile strength (MPa) | | 21.0 | 20.5 | 22.6 | 20.7 | 21.5 | 20.8 | 20.3 | 19.8 | 19.1 |
| | Elongation (%) | | 511 | 522 | 499 | 501 | 503 | 516 | 525 | 533 | 558 |
| | Hardness (pt) | | 70 | 69 | 71 | 70 | 70 | 70 | 70 | 69 | 68 |

**[Table 2]**

| | | | Comparative Example | | | | | |
|---|---|---|---|---|---|---|---|---|
| | | | 1 | 2 | 3 | 4 | 5 | 6 |
| Sulfur-modified chloroprene elastomer composition | Organic acid content (parts by mass) | | 4.8 | 6.0 | 15.0 | 15.0 | 6.0 | 6.0 |
| | Ash content (parts by mass) | Sodium | 0.11 | 0.01 | 0.35 | 0.02 | 0.07 | 0.07 |
| | | Potassium | - | - | - | - | - | - |
| | Organic acid content/ash content | | 44 | 600 | 43 | 750 | 86 | 86 |
| | Tetraethylthiuram disulfide | | 1.8 | 1.8 | 1.8 | 1.8 | 0.5 | 5.0 |
| | Tetrabutylthiuram disulfide | | - | - | - | - | - | - |
| | Tetrakis (2-ethylhexyl)thiuram disulfide | | - | - | - | - | - | - |
| Storage viscosity stability (pt) | | | -21 | -4 | -24 | -3 | -7 | -20 |
| Scorching resistance (min) | | | 25 | 15 | 28 | 14 | 17 | 40 |
| Physical properties of vulcanized article | Tensile strength (MPa) | | 20.8 | 21.8 | 19.6 | 22.8 | 21.7 | 18.0 |
| | Elongation (%) | | 513 | 503 | 454 | 491 | 500 | 531 |
| | Hardness (pt) | | 70 | 71 | 70 | 71 | 70 | 69 |

As shown in Tables 1 and 2, the sulfur-modified chloroprene elastomer compositions of Examples 1 to 9, which were prepared within the scope of the present invention, were superior in viscosity storage stability and scorching resistance to the sulfur-modified chloroprene elastomer compositions of Comparative Examples 1 to 6, which were prepared by a conventional method.

## Claims

1. A sulfur-modified chloroprene elastomer composition,
obtainable by emulsion-polymerizing 2-chloro-1,3-butadiene, 2,3-dichloro-1,3-butadiene and sulphur by using an emulsifier and a polymerization initiator, and regulating the molecular weight thereof by using a thiuram compound,
comprising the sulfur-modified chloroprene elastomer and the thiuram compound in an amount of 1 to 2.5 mass % and having
an organic acid content, as determined in accordance with JIS K6237, adjusted to 1.5 to 15 mass % by regulation of the amount of the organic acid and/or the organic acid salt added as emulsifier during emulsion polymerization,
an ash content, as determined in accordance with JIS K6228, adjusted to 0.03 to 0.2 mass % by regulation of the amount of the organic acid salt added as emulsifier during emulsion polymerization, and
a mass ratio of the organic acid content to the ash content (organic acid content/ash content) of 50 to 500.

2. The sulfur-modified chloroprene elastomer composition according to Claim 1, wherein the ash contains sodium and/or potassium.

3. The sulfur-modified chloroprene elastomer composition according to Claim 1 or 2, wherein the thiuram compound is at least one compound selected from tetraethylthiuram disulfide, tetrabutylthiuram disulfide, and tetrakis(2-ethylhexyl)thiuram disulfide.

4. The sulfur-modified chloroprene elastomer composition according to any one of Claims 1 to 3, wherein the organic acid contains a rosin acid and/or a rosin acid derivative.

5. The sulphur-modified chloroprene elastomer composition according to any one of Claims 1 to 4, blended with at least one component selected from the group consisting of softeners, fillers, reinforcing agents, plasticizers, processing aids, lubricants, aging inhibitors, stabilizers and silane-coupling agents.

6. A vulcanised article, comprising the sulphur-modified chloroprene elastomer composition according to Claim 5.

7. The use of the sulphur-modified chloroprene elastomer composition of Claim 5 in the manufacture of a vulcanised article.

8. A method of manufacturing a vulcanised article comprising:
- blending a vulcanising agent and a vulcanising accelerator used in chloroprene rubbers with the sulphur-modified chloroprene elastomer composition of Claim 5 to produce a mixture,
- kneading the mixture at a temperature at or below the vulcanising temperature to produce a kneaded mixture,
- molding the kneaded mixture into the desired shape, and
- vulcanising the molded mixture.

## Patentansprüche

1. Zusammensetzung eines Schwefel-modifizierten Chloropren-Elastomers,
die durch Emulsionspolymerisation von 2-Chlor-1,3-butadien, 2,3-Dichlor-1,3-butadien und Schwefel durch Verwendung eines Emulgators und eines Polymerisationsinitiators und Regulierung des Molekulargewichts davon durch Verwendung einer Thiuramverbindung erhalten werden kann,
die das Schwefel-modifizierte Chloropren-Elastomer und die Thiuramverbindung in einer Menge von 1 bis 2,5 Masse-% umfasst und Folgendes aufweist:
einen Gehalt an organischer Säure, wie gemäß JIS K6237 bestimmt, der auf 1,5 bis 15 Masse-% durch Regulierung der Menge der organischen Säure und/oder des organischen Säuresalzes, die/das als Emulgator während der Emulsionspolymerisation zugegeben wird, eingestellt wird,
einen Aschegehalt, wie gemäß JIS K6228 bestimmt, der auf 0,03 bis 0,2 Masse-% durch Regulierung der Menge des organischen Säuresalzes, das als Emulgator während der Emulsionspolymerisation zugegeben wird, eingestellt wird, und
ein Masseverhältnis des Gehalts an organischer Säure zum Aschegehalt (Gehalt an organischer Säure/Aschegehalt) von 50 bis 500.

2. Zusammensetzung eines Schwefel-modifizierten Chloropren-Elastomers nach Anspruch 1, wobei die Asche Natrium und/oder Kalium enthält.

3. Zusammensetzung eines Schwefel-modifizierten Chloropren-Elastomers nach Anspruch 1 oder 2, wobei die Thiuramverbindung mindestens eine Verbindung ist, die aus Tetraethylthiuramdisulfid, Tetrabutylthiuramdisulfid und Tetrakis(2-ethylhexyl)thiuramdisulfid ausgewählt ist.

4. Zusammensetzung eines Schwefel-modifizierten Chloropren-Elastomers nach einem der Ansprüche 1 bis 3, wobei die organische Säure eine Kolophoniumsäure und/oder ein Kolophoniumsäurederivat enthält.

5. Zusammensetzung eines Schwefel-modifizierten Chloropren-Elastomers nach einem der Ansprüche 1 bis 4, die mit mindestens einer Komponente vermischt ist, die aus der Gruppe ausgewählt ist, die aus Folgenden besteht: Weichmachern, Füllstoffen, Verstärkungsmitteln, Plastiziermitteln, Verarbeitungshilfsstoffen, Gleitmitteln, Alterungsinhibitoren, Stabilisatoren und Silan-Kupplungsmitteln.

6. Vulkanisierter Artikel, der die Zusammensetzung eines Schwefel-modifizierten Chloropren-Elastomers nach Anspruch 5 umfasst.

7. Verwendung der Zusammensetzung eines Schwefel-modifizierten Chloropren-Elastomers nach Anspruch 5 bei der Herstellung eines vulkanisierten Artikels.

8. Verfahren zur Herstellung eines vulkanisierten Artikels, das Folgendes umfasst:
- Vermischen eines Vulkanisationsmittels und eines Vulkanisationsbeschleunigers, die in Chloropren-Kautschuken verwendet werden, mit der Zusammensetzung eines Schwefel-modifizierten Chloropren-Elastomers nach Anspruch 5, um eine Mischung zu erzeugen,
- Kneten der Mischung bei einer Temperatur bei oder unterhalb der Vulkanisationstemperatur, um eine geknetete Mischung zu erzeugen,
- Formen der gekneteten Mischung in die gewünschte Form und
- Vulkanisieren der geformten Mischung.

## Revendications

1. Composition d'élastomère de chloroprène modifié par du soufre,
pouvant être obtenue par la polymérisation en émulsion de 2-chloro-1,3-butadiène, de 2,3-dichloro-1,3-butadiène et de soufre, par l'utilisation d'un émulsifiant et d'un initiateur de polymérisation, et la régulation de son poids moléculaire par l'utilisation d'un composé de thiurame,
comprenant l'élastomère de chloroprène modifié par du soufre et le composé de thiurame selon une quantité allant de 1 à 2,5% en masse et ayant
une teneur en acide organique, telle que déterminée conformément à JIS K6237, ajustée à de 1,5 à 15% en masse par la régulation de la quantité de l'acide organique et/ou du sel de l'acide organique ajouté comme émulsifiant lors de la polymérisation en émulsion,
une teneur en cendres, telle que déterminée conformément à JIS K6228, ajustée à de 0,03 à 0,2% en masse par la régulation de la quantité du sel de l'acide organique ajouté comme émulsifiant lors de la polymérisation en émulsion, et
un rapport de masse de la teneur en acide organique à la teneur en cendres (teneur en acide organique/teneur en cendres) allant de 50 à 500.

2. Composition d'élastomère de chloroprène modifié par du soufre selon la revendication 1, dans laquelle les cendres contiennent du sodium et/ou du potassium.

3. Composition d'élastomère de chloroprène modifié par du soufre selon la revendication 1 ou 2, dans laquelle le composé de thiurame est au moins un composé choisi parmi le disulfure de tétraéthylthiurame, le disulfure de tétrabutylthiurame et le disulfure de tétrakis(2-éthylhexyl)thiurame.

4. Composition d'élastomère de chloroprène modifié par du soufre selon l'une quelconque des revendications 1 à 3, dans laquelle l'acide organique contient un acide résinique et/ou un dérivé d'acide résinique.

5. Composition d'élastomère de chloroprène modifié par du soufre selon l'une quelconque des revendications 1 à 4, mélangée avec au moins un composant choisi dans le groupe constitué par les adoucissants, les charges, les agents renforçants, les plastifiants, les adjuvants de fabrication, les lubrifiants, les inhibiteurs de vieillissement, les stabilisants et les agents de couplage de silane.

6. Article vulcanisé, comprenant la composition d'élastomère de chloroprène modifié par du soufre selon la revendication 5.

7. Utilisation de la composition d'élastomère de chloroprène modifié par du soufre selon la revendication 5, dans la fabrication d'un article vulcanisé.

8. Méthode de fabrication d'un article vulcanisé, comprenant :
- le mélange d'un agent de vulcanisation et d'un accélérateur de vulcanisation utilisé dans les caoutchoucs de chloroprène, avec la composition d'élastomère de chloroprène modifié par du soufre selon la revendication 5, afin de produire un mélange,
- le pétrissage du mélange à une température égale ou inférieure à la température de vulcanisation, afin de produire un mélange pétri,
- le moulage du mélange pétri selon la forme désirée, et
- la vulcanisation du mélange moulé.
